# EUROPÄISCHE PATENTSCHRIFT

(11) **EP 4 291 541 B1**
(45) Veröffentlichungstag und Bekanntmachung des Hinweises auf die Patenterteilung: **09.10.2024**
(21) Anmeldenummer: 22706555.4
(22) Anmeldetag: 10.02.2022
(51) Int. Cl.: C04B 20/10, C04B 40/00

(54) **GRUNDSTOFF FÜR DIE HERSTELLUNG EINES BAUSTOFFS, STOFFGEMISCH VERWENDBAR ALS BAUSTOFF, BETON AUS EINEM STOFFGEMISCH UND VERFAHREN ZUR HERSTELLUNG EINES ALS BAUSTOFF VERWENDBAREN STOFFGEMISCHS**
RAW MATERIAL FOR PRODUCING CONSTRUCTION MATERIAL, MATERIAL MIXTURE WHICH CAN BE USED AS CONSTRUCTION MATERIAL, CONCRETE MADE OF A MATERIAL MIXTURE, AND METHOD FOR PRODUCING A MATERIAL MIXTURE WHICH CAN BE USED AS CONSTRUCTION MATERIAL
MATIÈRE PREMIÈRE POUR LA PRODUCTION D'UN MATÉRIAU DE CONSTRUCTION, MÉLANGE DE MATÉRIAUX POUVANT ÊTRE UTILISÉ COMME MATÉRIAU DE CONSTRUCTION, BÉTON CONSTITUÉ D'UN MÉLANGE DE MATÉRIAUX ET PROCÉDÉ DE PRODUCTION D'UN MÉLANGE DE MATÉRIAUX POUVANT ÊTRE UTILISÉ COMME MATÉRIAU DE CONSTRUCTION

(30) Priorität: 11.02.2021 DE 102021103219
(43) Veröffentlichungstag der Anmeldung: 20.12.2023
(73) Patentinhaber: TRITON CHEMICALS INTERNATIONAL LTD., 1712 Graalum (NO)
(72) Erfinder: THÖNE, Gerd, 32105 Bad Salzufflen (DE)
(74) Vertreter: Patentanwälte Bauer Vorberg Kayser
(86) Internationale Anmeldenummer: PCT/EP2022/053301
(87) Internationale Veröffentlichungsnummer: WO 2022/171766

(56) Entgegenhaltungen:
- WO-A1-2019/157593
- CN-A- 108 892 450
- DE-A1- 102015 114 554

## Beschreibung

Die vorliegende Erfindung betrifft einen Grundstoff für die Herstellung eines Baustoffs mit den Merkmalen des Oberbegriffs von Anspruch 1, ein Stoffgemisch verwendbar als Baustoff mit den Merkmalen von Anspruch 7, einen Beton mit den Merkmalen des Oberbegriffs von Anspruch 11 sowie ein Verfahren zur Herstellung eines als Baustoff verwendbaren Stoffgemischs mit den Merkmalen des Oberbegriffs von Anspruch 12.

Im Zuge der zunehmenden Industrialisierung in vielen Ländern der Welt und einem sich ständig steigernden Platzbedarf der Menschen, kommt dem Hochbau eine immer größere Bedeutung zu. Eines der gängigsten Baumaterialien ist der Beton. Er ist widerstandfähig und dadurch langlebig. Beton ist ein preiswertes Material und die für eine Betonmischung benötigten Materialien Bindemittel wie etwa Zement, Wasser und ein Füllstoff, wie zum Beispiel Sand sind in weiten Teilen der Erde leicht verfügbar.

Die leichte Verfügbarkeit von Sand trifft aber zum Beispiel gerade nicht auf Wüstenregionen im arabischen Raum zu, da der Wüstensand dort nicht ohne Weiteres für die Verwendung im Beton geeignet ist. Diese fehlende Eignung führt dazu, dass in diese Wüstengebiete große Mengen von geeignetem Sand aus zum Beispiel Australien oder dem Iran importiert werden müssen, um dort Beton herzustellen. Das Bindemittel wie etwa der Zement bindet mit einer gipserzeugten Etringit-Bildung ab, so dass die dabei entstehenden nadelförmigen Kristalle eine Verbindung zwischen den Füllstoffpartikeln, wie zum Beispiel Sandkörnen, schaffen und diese fest miteinander verbinden. Der Wüstensand eignet sich für gewöhnlich aufgrund seiner Kornform und Korngröße nicht dafür, da seine runden, fast kugelförmigen Körner in einer Schüttung zu viele bzw. zu große Zwischenräume bilden, welche dann vom Bindemittel bzw. Zement nur schlecht überbrückt werden können. Dies führt wiederum dazu, dass der ausgehärtete Beton mit Wüstensand zu geringe Festigkeiten aufweist, um für den Hochbau in Frage zu kommen.

Zur Verbesserung der Eigenschaften ist es von ultrafesten Betonen bekannt, dass durch die Zugabe von Quarzmehlen, wie zum Beispiel SiOz-Quarz, von etwa 10 % zum Beton die Festigkeiten gesteigert werden können. Dieses Verfahren ist jedoch durch die große Menge an benötigtem Zusatzstoff sehr teuer und erzielt bei der Verwendung von Wüstensand als Füllstoff nur geringe Festigkeitssteigerungen. CN108892450 offenbart einen Beton enthaltend Zement, Silica Fume und Wüstensand.

Somit ist es die Aufgabe der Erfindung ein Stoffgemisch bereit zu stellen, welches als Baustoff im Hochbau verwendet werden kann, wobei als Füllstoff Wüstensand verwendet wird. Ebenso ist es die Aufgabe der Erfindung, einen entsprechenden Grundstoff für die Herstellung eines Baustoffs, einen Beton und ein Verfahren zur Herstellung eines als Baustoff verwendbaren Stoffgemischs bereitzustellen. Bezogen auf einen Grundstoff für die Herstellung eines Baustoffs mit den Merkmalen des Oberbegriffs von Anspruch 1 wird diese Aufgabe durch die Merkmale des kennzeichnenden Teils von Anspruch 1 gelöst. Bezogen auf ein Stoffgemisch verwendbar als Baustoff mit den Merkmalen von Anspruch 7 wird diese Aufgabe durch die Merkmale des kennzeichnenden Teils von Anspruch 7 gelöst. Bezogen auf einen Beton mit den Merkmalen des Oberbegriffs von Anspruch 11 wird diese Aufgabe durch die Merkmale des kennzeichnenden Teils von Anspruch 11 gelöst. Bezogen auf das Verfahren zur Herstellung eines als Baustoff verwendbaren Stoffgemischs mit den Merkmalen des Oberbegriffs von Anspruch 12 wird diese Aufgabe durch die Merkmale des kennzeichnenden Teils von Anspruch 12 gelöst.

Die Prozentangaben hier und nachfolgend beziehen sich auf Gewichtsprozente soweit nicht anders angegeben.

Die Erfindung betrifft also einen Grundstoff für die Herstellung eines Baustoffs umfassend mindestens ein Bindemittel, dass Zement umfasst, einen Zusatzstoff zur Beeinflussung der Eigenschaften unc mindestens einen Füllstoff, welcher als Grundmaterial dient.

Der erfindungsgemäße Grundstoff ist dadurch gekennzeichnet, dass der mindestens eine Zusatzstoff Nanopartikel in Form von Siliziumdioxid umfasst und dass der mindestens eine Füllstoff Wüstensand umfasst, wobei die Nanopartikel eine Partikelgröße kleiner 10 nm aufweisen. Als alternative Bezeichnung für den Begriff "Zusatzstoff" kann auch "Zuschlagstoff' verwendet werden. Als alternative Bezeichnung für den Begriff "Füllstoff" kann auch "Zuschlag" verwendet werden. Dieser "Zuschlag" ist vom "Zuschlagstoff" zu unterscheiden.

Die Erfindung betrifft ferner ein Stoffgemisch verwendbar als Baustoff und insbesondere verwendbar als Beton mit Wasser zur chemischen Abbindung.

Das erfindungsgemäße Stoffgemisch ist dadurch gekennzeichnet, dass das Stoffgemisch einen erfindungsgemäßen Grundstoff aufweist und dass der mindestens eine Füllstoff den Hauptbestandteil des Stoffgemischs ausmacht.

Die Erfindung betrifft ebenso einen Beton aus einem Stoffgemisch. Der erfindungsgemäße Beton ist dadurch gekennzeichnet, dass das Stoffgemisch ein erfindungsgemäßes Stoffgemisch ist.

Schließlich betrifft die Erfindung ein Verfahren zur Herstellung eines als Baustoff verwendbaren Stoffgemischs, wobei ein Bindemittel, Wasser zur chemischen Abbindung, mindestens ein Zusatzstoff zur Beeinflussung der Eigenschaften und mindestens ein Füllstoff als Grundmaterial mechanisch gemischt werden, wobei der mindestens eine Füllstoff den Hauptbestandteil des Stoffgemischs ausmacht.

Das erfindungsgemäße Verfahren ist dadurch gekennzeichnet, dass der mindestens eine Zusatzstoff Nanopartikel in Form von Siliziumdioxidpartikeln umfasst, wobei die Nanopartikel eine Partikelgröße kleiner 10 nm aufweisen, und der mindestens eine Füllstoff Wüstensand umfasst.

Unter dem Begriff des Zusatzstoffs kann vorliegend jeder Bestandteil des Baustoffs verstanden werden, welcher weder das Grundmaterial noch das Bindemittel bildet für den Baustoff. Insbesondere kann der mindestens eine Zusatzstoff zur Beeinflussung der Eigenschaften des Baustoffs dienen. Es kann sein, dass der Grundstoff mehr als einen Zusatzstoff und damit Zusatzstoffe umfasst.

Bevorzugt ist, dass der mindestens eine Füllstoff als Grundmaterial für den Baustoff dient. Insbesondere kann es sich bei dem Baustoff um Beton handeln. Es kann sein, dass der Grundstoff mehr als einen Füllstoff und damit Füllstoffe umfasst. Es kann alternativ sein, dass der Grundstoff nur einen Füllstoff umfasst.

Das Bindemittel umfasst Zement. Es kann aus Zement bestehen. Zement ist ein anorganischer Stoff und in der Regel fein gemahlen. Aufgrund seiner Eigenschaften dient er als Bindemittel im Stoffgemisch bzw. im Beton. Er erhärtet durch die chemische Reaktion mit Wasser (Hydratation) und bleibt danach fest. Dieser Vorgang wird auch Abbinden genannt. Es können alle in der Baubranche gängigen Zement-Sorten als Bindemittel verwendet werden.

Der mindestens eine Zusatzstoff kann insbesondere alle Stoffe umfassen, die dem Grundstoff zugefügt werden, um dessen Eigenschaften, die Eigenschaften des Stoffgemischs oder die Eigenschaften des Baustoffs vor, während und nach der Abbindung zu beeinflussen. Das können Stoffe zur Beeinflussung der Viskosität oder Fließeigenschaften des Grundstoffs oder des Stoffgemischs sein, oder der Festigkeit, der Schwindung des Baustoffs oder Betons, der Wasserdurchlässigkeit des Baustoffs oder Betons, der chemischen Beständigkeit oder Ähnlichem. Der mindestens eine Zusatzstoff kann dabei fest, flüssig oder möglicherweise gasförmig zugegeben werden und direkt als Reinstoff oder in Lösungen oder Emulsionen zugegeben werden.

Als Hauptbestandteil wird hier ein Anteil am Stoffgemisch von mindestens 50%, vorzugsweise von mindestens 60%, weiter vorzugsweise von mindestens 70% verstanden. Diesen Hauptbestandteil bildet im vorliegenden Stoffgemisch der mindestens eine Füllstoff. Es können auch alle Füllstoffe insgesamt den Hauptbestandteil bilden. Füllstoffe allgemein sind Stoffe, die sich passiv verhalten, d.h. nicht an der chemischen Reaktion teilnehmen und diese auch nicht wesentlich beeinflussen. Sie werden meist aus Kostengründen eingesetzt, um teurere Bestandteile des Grundstoffs oder Stoffgemischs zu ersetzen. In Frage kommen daher alle preisgünstigen Stoffe, deren eigene Festigkeit ausreichend hoch ist. Oft dienen als Füllstoffe Schüttgüter, so dass die Festigkeit der einzelnen Partikel oder Körner hoch genug sein muss. Beispiele für typische Schüttgüter als Füllstoffe sind Sand und Kies.

In der vorliegenden Erfindung wird Wüstensand als ein Füllstoff verwendet. Wüstensand eignet sich durch die Festigkeit seiner Körner und die großen Vorkommen in Wüstengebieten sehr gut als preisgünstiger Füllstoff. Wüstensand muss aber nicht zwangsläufig aus Wüstengebieten stammen. Vielmehr ist Wüstensand durch seine Korngrößen und Kornformen charakterisiert. Solche runden Körner können zum Beispiel durch Winde in der Wüste entstehen, welche den Sand permanent umwälzen und so zu Beginn eckige Körner mit der Zeit verrunden. So entstandener Sand mit runden Körnern wird auch Flugsand genannt und ist in dieser Anmeldung auch von dem Begriff Wüstensand umfasst. Die Sandkörner können auch durch Wasser verrundet worden sein. Vorzugsweise weist der Wüstensand einen Anteil von mindestens 90 % und insbesondere von mindestens 95 % von Körnern auf, welche im Wesentlichen rund sind. Im Wesentlichen rund bedeutet hier und nachfolgend im Wesentlichen kugelförmig.

Eine weitere charakteristische Größe sind die Korngrößen. So sollen auch alle Sande als Wüstensand verstanden werden, deren Korngrößen im Wesentlichen sehr klein sind. So umfassen diese Wüstensande im Wesentlichen Feinanteile und nur geringe Mittel- und Grobanteile. Vorzugsweise umfasst der Wüstensand überwiegend, insbesondere also zu mindestens 50 % oder zu mindestens 75 %, Körner mit einer Korngröße zwischen 0,05 mm bis 0,2 mm. Vorzugsweise sind Körner im Bereich von etwa 0,2 mm bis 0,6 mm kaum und grobe Korngrößen im Bereich von etwa 0,6 mm bis 2 mm wenig vorhanden sind. Der Wüstensand kann also dadurch charakterisiert sein, dass mindestens 80% der Sandkörner eine Korngröße kleiner als 0,20 mm aufweisen und höchstens 15% größer als 0,60 mm sind. Vorzugsweise sind mindestens 90% der Sandkörner kleiner als 0,20 mm und höchstens 10 % größer als 0,60 mm.

Überraschenderweise hat sich gezeigt, dass das Vorhandensein der Nanopartikel dazu führt, dass nicht die normalerweise vom Bindemittel bzw. Zement zwischen den Füllstoff-Partikeln bevorzugt gebildeten Etringit-Bindungen ausgebildet werden, sondern vornehmlich Calcium-Silicium-Hydrat-Bindungen (CSH-Bindungen). Die CSH-Bindungen bilden eine watteähnliche Struktur aus, die in der Lage ist, die Hohlräume zwischen kugelförmigen Wüstensandkörner auszufüllen und dabei die nötige Stabilität zu bieten. Die CSH-Bindungen können auch größere Lücken zwischen den Körnern besser und stabiler ausfüllen. Vorzugsweise sind also Nanopartikel umfasst, welche beim Bindemittel bzw. Zement zur Ausbildung von CSH-Bindungen führen. Von einem solchen Baustoff oder Beton werden deutlich höhere Festigkeiten erzielt als von einem Baustoff oder einem Beton mit Wüstensand aber ohne Nanopartikel.

Eine bevorzugte Ausführungsform ist dadurch gekennzeichnet, dass die Füllstoffe mindestens 50% Wüstensand umfassen. Neben Wüstensand können noch weitere Füllstoffe wie zum Beispiel herkömmlicher Sand mit scharfkantigen Körnern oder Kies verwendet werden. Um die Festigkeit des ausgehärteten Baustoffs oder Betons zu optimieren, kann ein Anteil von 50% Wüstensand am mindestens einen Füllstoff von Vorteil sein. Es kann je nach Anwendungsfall auch ein Wüstensandanteil von mindestens 60%, mindestens 70%, mindestens 80% oder mindestens 90% von Vorteil sein. Es kann auch sein, dass dieser bevorzugte Anteil des Wüstensands sich auf alle Füllstoffe insgesamt bezieht. Auf diese Weise kann ggf. sehr weitgehend auf lokal verfügbaren Wüstensand zurückgegriffen werden ohne dass andere Arten von Sand in größeren Mengen transportiert werden müssen.

Als Füllstoff neben dem Wüstensand kann nahezu jedes Material verwendet werden, dass im Bereich der Baustelle bzw. des Einsatzgebietes zur Verfügung steht. Insbesondere eignet sich Schotter, Erde, Sand oder auch aufgebrochener Asphalt. Somit ist in einer weiteren Ausführungsform des erfindungsgemäßen Stoffgemischs dieses dadurch gekennzeichnet, dass als Füllstoff jede Art von Boden und/oder Materialien wie Bauxit, Latent, Vulkanasche, Bims, recycelter Beton und Asche aus Verbrennungsprozessen eingesetzt werden können.

Nach einer weiteren bevorzugten Ausführungsform ist vorgesehen, dass die Füllstoffe mindestens 50% Feinsand umfassen, vorzugsweise mindestens 80%, weiter vorzugsweise mindestens 90%. Hier und nachfolgend wird unter Feinsand ein Sand mit Korngrößen zwischen 0,063 mm bis 0,2 mm verstanden.

Nach einer weiteren bevorzugten Ausführungsform ist vorgesehen, dass der mindestens eine Füllstoff einen Sand mit im Wesentlichen kugelförmigen Körnern umfasst. Ebenso kann es sein, dass der mindestens eine Füllstoff aus Sand mit im Wesentlichen kugelförmigen Körnern besteht. Mit einem Sand mit im Wesentlichen kugelförmigen Körnern können auch Körner umfasst sein, deren Form zwar unregelmäßig ist, deren Ecken und Kanten aber abgerundet sind. Es können Anteile des Sandes mit im Wesentlichen kugelförmigen Körnern in dem mindestens einen Füllstoff oder in allen Füllstoffen insgesamt von mindestens 50%, mindestens 60%, mindestens 70%, mindestens 80% oder mindestens 90% von Vorteil sein.

Nach einer weiteren bevorzugten Ausführungsform ist vorgesehen, dass der mindestens eine Füllstoff mindestens 10% Betonkies umfasst, vorzugsweise mindestens 20%, weiter vorzugsweise mindestens 30%. Es kann auch sein, dass alle Füllstoffe insgesamt diesen Anteil Betonkies aufweisen. Betonkies ist ein Schüttgut, welches im Baugewerbe häufig zur Betonherstellung verwendet wird und ein Gemisch aus Sand und Kies in bestimmten Korngrößen umfasst. Vorzugsweise weist der Betonkies überwiegend Korngrößen kleiner 16 mm oder kleiner 32 mm auf.

Eine bevorzugte Ausführungsform ist dadurch gekennzeichnet, dass die Nanopartikel einen Mengenanteil von 0,005 % bis 0,2 %, vorzugsweise von 0,01 % bis 0,1 % an dem Bindemittel und vorzugsweise an dem Zement haben. Anders ausgedrückt bewegt sich das Gewicht der Nanopartikel in dem entsprechenden Prozentsatzbereich des Gewichts des Bindemittels bzw. des Zements. Ebenso ist bevorzugt, dass die Nanopartikel einen Anteil von 0,1 % bis 2 %, vorzugsweise von 0,2 % bis 0,6 % an dem mindestens einen Zusatzstoff oder an allen Zusatzstoffen aufweisen.

Erfindungsgemäß ist vorgesehen, dass die Nanopartikel Siliziumdioxidpartikel umfassen, vorzugsweise aus Siliziumdioxidpartikel bestehen. Siliziumdioxid in Nanopartikel-Größe ist ein geeignetes Zusatzmittel, welches den Zement die erwähnten CSH-Bindungen vorzugsweise ausbilden lässt.

Nach einer weiteren bevorzugten Ausführungsform ist vorgesehen, dass die Nanopartikel Polydimethylsiloxanpartikel umfassen oder aus Polydimethylsiloxanpartikein bestehen. Auch Polydimethylsiloxan eignet sich dazu, den Zement die CSH-Bindungen ausbilden zu lassen.

Ebenso kann es sein, dass die Nanopartikel sowohl Polydimethylsiloxanpartikel als auch Siliziumdioxidpartikel umfassen.

Nach einer weiteren bevorzugten Ausführungsform ist vorgesehen, dass die Nanopartikel in einer wässrigen Emulsion vorlagen und in diesem Zustand dem Grundstoff oder dem Stoffgemisch zugeführt werden oder wurden. Zur homogeneren Verteilung und zur Vermeidung von Klumpenbildung ist es von Vorteil, wenn die Nanopartikel zunächst mit Wasser zu einer Emulsion verarbeitet werden, welche dann in dieser Form dem Grundstoff oder dem Stoffgemisch zugeführt werden.

Erfindungsgemäß ist vorgesehen, dass die Nanopartikel eine Partikelgröße von kleiner 10 nm aufweisen. Vorzugsweise weisen die Nanopartikel im Wesentlichen vollständig eine Partikelgröße kleiner als 10 nm auf.

Eine bevorzugte Ausführungsform ist dadurch gekennzeichnet, dass der Grundstoff Zusatzstoffe in den ausgewiesenen Anteilen aufweist:
- 10 % bis 20 %, vorzugsweise 16,5 % Fließmittel mit Polycarboxylat und/oder
- 5 % bis 15 %, vorzugsweise 8,3 % Organosilanol und/oder
- 30 % bis 60 %, vorzugsweise 45,2 % Wasser, und/oder
- 1 % bis 3 %, vorzugsweise 2,2 % von mindestens einem von Hydroxyethylcellulose und Carboxymethylcellulose, und/oder
- 0,01 % bis 0,6 %, vorzugsweise 0,3 % Kalkhydrat oder Löschkalk, und/oder
- 5 % bis 20 %, vorzugsweise 12,4 % Abbindebeschleuniger und/oder
- 5 % bis 20 %, vorzugsweise 13,7 % Latex-Pulver oder Latex-Dispersion und/oder
- 0,1 % bis 2 %, vorzugsweise 0,8 % Konservierungsmittel.

Bevorzugt ist weiter, dass die Anteile der soeben genannten Bestandteile der Zusatzstoffe zusammen mit dem Anteil der Nanopartikel 100 Prozent ergibt.

Bevorzugt ist, dass der Abbindebeschleuniger Calciumformiat umfasst oder aus Calciumformiat besteht.

Gegenüber der soeben beschriebenen bevorzugten Ausführungsform ist es auch möglich, den Wasseranteil an den Zusatzstoffen deutlich zu erhöhen, zum Beispiel auf 80-90%, wobei aber die Verhältnisse der übrigen Zusatzstoffe im Wesentlichen gleich gehalten werden.

Eine entsprechende bevorzugte Ausführungsform ist dadurch gekennzeichnet, dass der Grundstoff Zusatzstoffe in den ausgewiesenen Anteilen aufweist:
- Weniger als 10 %, vorzugsweise 6 % Fließmittel mit Polycarboxylat und/oder
- 1 % bis 5 %, vorzugsweise 3 % Organosilanol und/oder
- 60 % bis 90 %, vorzugsweise 80,1 % Wasser, und/oder
- 0,5 % bis 1,5 %, vorzugsweise 0,8 % von mindestens einem von Hydroxyethylcellulose und Carboxymethylcellulose, und/oder
- 0,01 % bis 0,5 %, vorzugsweise 0,1 % Kalkhydrat oder Löschkalk, und/oder
- 2,5 % bis 6,5 %, vorzugsweise 4,5 % Abbindebeschleuniger und/oder
- 3 % bis 7 %, vorzugsweise 5 % Latex-Pulver oder Latex-Dispersion und/oder
- 0,1 % bis 0,5 %, vorzugsweise 0,3 % Konservierungsmittel.

Bevorzugt ist weiter, dass die Anteile der soeben genannten Bestandteile der Zusatzstoffe zusammen mit dem Anteil der Nanopartikel 100 Prozent ergibt.

Nach einer bevorzugten Ausführungsform des erfindungsgemäßen Stoffgemischs ist vorgesehen, dass das Stoffgemisch den mindestens einen Zusatzstoff mit einem Gewichtsanteil von 1 % bis 10 %, vorzugsweise von 2 % bis 3 %, des Gewichtsanteils des Bindemittels aufweist. Es kann auch sein, dass alle Zusatzstoffe insgesamt den obigen Gewichtsanteil aufweisen. Das Verhältnis von Zusatzstoffen und Bindemittel - z. B. Zement - spielt eine entscheidende Rolle bei der Ausbildung der CSH-Bindungen im Stoffgemisch. Daher ist es von Vorteil, wenn die Menge der zugegebenen Zusatzstoffe an die Menge des Zements angepasst wird. Es haben sich Zusatzstoffmengen von 1 % bis 15 %, insbesondere von 2 % bis 10 %, als vorteilhaft für die mechanischen Eigenschaften erwiesen. Je nach Anwendungsfall können aber auch 2 % bis 3 % von Vorteil sein. Wie bereits erwähnt sind diese Prozentangaben auf das Gewicht des Bindemittels und insbesondere auf das Gewicht des Zements bezogen.

Nach einer weiteren bevorzugten Ausführungsform des erfindungsgemäßen Stoffgemischs ist vorgesehen, dass das ausgehärtete Stoffgemisch für den Hochbau geeignet ist. Das ausgehärtete Stoffgemisch kann auch als Baustoff oder Beton bezeichnet werden. Für den Hochbau geeignet bedeutet vorrangig, dass die Festigkeiten des ausgehärteten Baustoffs oder Betons aus dem erfindungsgemäßen Stoffgemisch vergleichbar oder besser als die Festigkeiten von herkömmlichem Baustoff oder Beton für den Hochbau sind. Vorzugsweise weist das ausgehärtete Stoffgemisch daher eine Druckfestigkeit von mindestens 30 N/mm² auf, weiter vorzugsweise von mindestens 35 N/mm².

Bevorzugt ist, dass das ausgehärtete Stoffgemisch eine Biegezugfestigkeit von mindestens 1,5 N/mm² aufweist. Ebenso ist bevorzugt, dass das ausgehärtete Stoffgemisch ein Elastizitätsmodul von mindestens 30 N/mm² aufweist.

Die Wasserpermeabilität des ausgehärteten Stoffgemischs - Baustoff oder Beton - spielt ebenfalls eine große Rolle. Sofern diese zu groß ist, können Stoffe aus dem Baustoff oder Beton herausgewaschen werden und seine Festigkeit damit nachträglich herabsetzen. Daher weist das ausgehärtete Stoffgemisch vorzugsweise eine Wasserpermeabilität von unter 0,01% auf.

Eine bevorzugte Ausführungsform des erfindungsgemäßen Verfahrens ist dadurch gekennzeichnet, dass das Siliziumoxid in Form einer wässrigen Emulsion dem Stoffgemisch beigemischt wird.

Bevorzugte Ausführungsformen, Merkmale und Eigenschaften des erfindungsgemäßen Grundstoffs, des erfindungsgemäßen Stoffgemischs, des erfindungsgemäßen Betons oder des erfindungsgemäßen Verfahrens entsprechen denen der jeweils anderen erfindungsgemäßen Gegenstände und umgekehrt.

In einem ersten Ausführungsbeispiel werden Zusatzstoffe mit den folgenden Bestandteilen zusammengemischt:
- 0,6 % Nanopartikel aus Siliziumdioxid mit einer Partikelgröße kleiner als 10 nm,
- 16,5 % Fließmittel mit Polycarboxylat,
- 8,3 % Organosilanol,
- 45,2 % Wasser,
- 2,2 % Hydroxyethylcellulose,
- 0,3 % Löschkalk,
- 12,4 % Abbindebeschleuniger,
- 13,7 % Latex-Pulver und
- 0,8 % Konservierungsmittel.

10 Kilogramm dieser Zusatzstoffe werden mit 400 Kilogramm Zement sowie Wasser und Wüstensand als Füllstoff gemischt und bilden anschließend einen Beton mit einem Gesamtgewicht von 2000 Kilogramm.

In einem zweitem Ausführungsbeispiel werden Zusatzstoffe mit den folgenden Bestandteilen zusammengemischt:
- 0,2 % Nanopartikel aus Polydimethylsiloxan mit einer Partikelgröße kleiner als 10 nm,
- 6 % Fließmittel mit Polycarboxylat,
- 3 % Organosilanol,
- 80,1 % Wasser,
- 0,8 % Hydroxyethylcellulose,
- 0,1 % Löschkalk,
- 4,5 % Abbindebeschleuniger,
- 5 % Latex-Pulver und
- 0,3 % Konservierungsmittel.
60 Kilogramm dieser Zusatzstoffe werden mit 600 Kilogramm Zement sowie Wasser und Wüstensand als Füllstoff gemischt und bilden anschließend einen Beton. Dieser weist ein Gesamtgewicht von 2000 Kilogramm auf.

## Patentansprüche

1. Grundstoff für die Herstellung eines Baustoffs, vorzugsweise von Beton, umfassend ein Bindemittel, das Zement umfasst, mindestens einen Zusatzstoff zur Beeinflussung der Eigenschaften und mindestens einen Füllstoff, welcher als Grundmaterial dient, **dadurch gekennzeichnet, dass** der mindestens eine Zusatzstoff Nanopartikel in Form von Siliziumdioxidpartikeln umfasst, wobei die Nanopartikel eine Partikelgröße kleiner 10 nm aufweisen, und dass der mindestens eine Füllstoff Wüstensand umfasst.

2. Grundstoff nach Anspruch 1, **dadurch gekennzeichnet, dass** der mindestens eine Füllstoff mindestens 50% Feinsand umfasst, vorzugsweise mindestens 80%, weiter vorzugsweise mindestens 90%.

3. Grundstoff nach einem der vorangegangenen Ansprüche, **dadurch gekennzeichnet, dass** die Nanopartikel aus Siliziumdioxidpartikel bestehen.

4. Grundstoff nach einem der vorangegangenen Ansprüche, **dadurch gekennzeichnet, dass** die Nanopartikel Polydimethylsiloxanpartikel umfassen, vorzugsweise aus Polydimethylsiloxanpartikel bestehen.

5. Grundstoff nach einem der vorangegangenen Ansprüche, **dadurch gekennzeichnet, dass** die Nanopartikel in einer wässrigen Emulsion vorlagen und in diesem Zustand dem Grundstoff zugeführt wurden.

6. Grundstoff nach einem der vorangegangenen Ansprüche, **dadurch gekennzeichnet, dass** der Grundstoff Zusatzstoffe in den ausgewiesenen Anteilen aufweist:
- Weniger als 10 %, vorzugsweise 6,0 % Fließmittel mit Polycarboxylat und/oder
- 1,0 bis 5,0 %, vorzugsweise 3,0 % Organosilanol und/oder
- 60 bis 90 %, vorzugsweise 80,1 % Wasser, und/oder
- 0,5 bis 1,5 %, vorzugsweise 0,8 % von mindestens einem von Hydroxyethylcellulose und Carboxymethylcellulose, und/oder
- 0,01 bis 0,5 %, vorzugsweise 0,1 % Kalkhydrat oder Löschkalk, und/oder
- 2,5 bis 6,5 %, vorzugsweise 4,5 % Abbindebeschleuniger und/oder
- 3,0 bis 7,0 %, vorzugsweise 5,0 % Latex-Pulver oder Latex-Dispersion und/oder
- 0,1 bis 0,5 %, vorzugsweise 0,3 % Konservierungsmittel.

7. Stoffgemisch verwendbar als Baustoff, vorzugsweise als Beton, mit Wasser zur chemischen Abbindung, **dadurch gekennzeichnet, dass** das Stoffgemisch einen Grundstoff nach einem der vorangegangenen Ansprüche aufweist und dass der mindestens eine Füllstoff den Hauptbestandteil des Stoffgemischs ausmacht.

8. Stoffgemisch nach Anspruch 7, **dadurch gekennzeichnet, dass** das Stoffgemisch den mindestens einen Zusatzstoff mit einem Gewichtsanteil von 1 % bis 10 %, vorzugsweise von 2 % bis 3 %, des Gewichtsanteils des Bindemittels aufweist.

9. Stoffgemisch nach Anspruch 7 oder 8, **dadurch gekennzeichnet, dass** das ausgehärtete Stoffgemisch für den Hochbau geeignet ist, vorzugsweise, dass das ausgehärtete Stoffgemisch eine Druckfestigkeit von mindestens 30 N/mm² aufweist, weiter vorzugsweise von mindestens 35 N/mm².

10. Stoffgemisch nach einem der Ansprüche 7 bis 9, **dadurch gekennzeichnet, dass** die Nanopartikel einen Mengenanteil von 0,005 % bis 0,2 %, vorzugsweise von 0,01 % bis 0,1 % an dem Bindemittel haben.

11. Beton aus einem Stoffgemisch, **dadurch gekennzeichnet, dass** das Stoffgemisch ein Stoffgemisch nach einem der Ansprüche 7 bis 10 und ausgehärtet ist.

12. Verfahren zur Herstellung eines als Baustoff verwendbaren Stoffgemischs nach Anspruch 7,
wobei ein Bindemittel, Wasser zur chemischen Abbindung, mindestens ein Zusatzstoff zur Beeinflussung der Eigenschaften und mindestens ein Füllstoff als Grundmaterial mechanisch gemischt werden, wobei der mindestens eine Füllstoff den Hauptbestandteil des Stoffgemisches ausmacht, **dadurch gekennzeichnet, dass** der mindestens eine Zusatzstoff Nanopartikel in Form von Siliziumdioxidpartikeln umfasst, wobei die Nanopartikel eine Partikelgröße kleiner 10 nm aufweisen, und der mindestens eine Füllstoff Wüstensand umfasst.

13. Verfahren nach Anspruch 12, **dadurch gekennzeichnet, dass** die Nanopartikel, insbesondere die Siliziumdioxidpartikel, in Form einer wässrigen Emulsion dem Stoffgemisch beigemischt wird.

## Claims

1. A base substance for the production of a building material, the base substance comprising a binder which comprises cement, at least one additive for influencing the properties, and at least one filler which serves as a base material, **characterised in that** the at least one additive comprises nanoparticles in the form of silicon dioxide particles, wherein the nanoparticles have a particle size less than 10 nm, and **in that** the at least one filler comprises desert sand.

2. The base substance according to claim 1, **characterised in that** the at least one filler comprises at least 50% fine sand, preferably at least 80%, more preferably at least 90%.

3. The base substance according to any one of the preceding claims, **characterised in that** the nanoparticles consist of silicon dioxide particles.

4. The base substance according to any one of the preceding claims, **characterised in that** the nanoparticles comprise polydimethylsiloxane particles, preferably consist of polydimethylsiloxane particles.

5. The base substance according to any one of the preceding claims, **characterised in that** the nanoparticles were present in an aqueous emulsion and were supplied to the base substance in this state.

6. The base substance according to any one of the preceding claims, **characterised in that** the base substance comprises additives in the stated proportions:
- less than 10%, preferably 6.0% of superplasticiser with polycarboxylate and/or
- 1.0 to 5.0%, preferably 3.0% of organosilanol and/or
- 60 to 90%, preferably 80.1% of water, and/or
- 0.5 to 1.5%, preferably 0.8% of at least one of hydroxyethyl cellulose and carboxymethyl cellulose, and/or
- 0.01 to 0.5%, preferably 0.1% of hydrated lime or slaked lime, and/or
- 2.5 to 6.5%, preferably 4.5% of setting accelerator and/or
- 3.0 to 7.0%, preferably 5.0% of latex powder or latex dispersion and/or
- 0.1 to 0.5%, preferably 0.3% of preservative.

7. A substance mixture usable as a building material, preferably as concrete, the substance mixture comprising water for chemical setting, **characterised in that** the substance mixture comprises a base substance according to any one of the preceding claims, and **in that** the at least one filler forms the main constituent of the substance mixture.

8. The substance mixture according to claim 7, **characterised in that** the substance mixture comprises the at least one additive with a proportion by weight of from 1% to 10%, preferably from 2% to 3% of the proportion by weight of the binder.

9. The substance mixture according to claim 7 or 8, **characterised in that** the cured substance mixture is suitable for building construction, preferably **in that** the cured substance mixture has a compressive strength of at least 30 N/mm², more preferably of at least 35 N/mm².

10. The substance mixture according to any one of claims 7 to 9, **characterised in that** the nanoparticles have a quantitative proportion of 0.005% to 0.2%, preferably from 0.01% to 0.1% of the binder.

11. A concrete formed from a substance mixture, **characterised in that** the substance mixture is a substance mixture according to any one of claims 7 to 10 and is cured.

12. A method for producing a substance mixture usable as a building material according to claim 7, wherein a binder, water for chemical setting, at least one additive for influencing the properties and at least one filler as a base material are mechanically mixed, wherein the at least one filler forms the main constituent of the substance mixture, **characterised in that** the at least one additive comprises nanoparticles in the form of silicon dioxide particles, wherein the nanoparticles have a particle size of less than 10 nm, and the at least one filler comprises desert sand.

13. The method according to claim 12, **characterised in that** the nanoparticles, in particular the silicon dioxide particles, are admixed to the substance mixture in the form of an aqueous emulsion.

## Revendications

1. Matériau de départ qui est destiné à la fabrication d'un matériau de construction, préférentiellement de béton, et qui comprend un liant comprenant du ciment, au moins un additif permettant d'influer sur les propriétés, et au moins une charge servant de matériau de base, **caractérisé en ce que** l'au moins un additif comprend des nanoparticules sous forme de particules de dioxyde de silicium, lesdites nanoparticules ayant une taille de particules inférieure à 10 nm, et que l'au moins une charge comprend du sable issu d'un désert.

2. Matériau de départ selon la revendication 1, **caractérisé en ce que** l'au moins une charge comprend au moins 50 %, de préférence au moins 80 %, de préférence encore au moins 90 % de sable fin.

3. Matériau de départ selon l'une des revendications précédentes, **caractérisé en ce que** lesdites nanoparticules sont constituées de particules de dioxyde de silicium.

4. Matériau de départ selon l'une des revendications précédentes, **caractérisé en ce que** lesdites nanoparticules comprennent des particules de polydiméthylsiloxane, et sont préférentiellement constituées de particules de polydiméthylsiloxane.

5. Matériau de départ selon l'une des revendications précédentes, **caractérisé en ce que** lesdites nanoparticules se présentaient sous forme d'une émulsion aqueuse et qu'elles ont été introduites sous cette forme dans ledit matériau de départ.

6. Matériau de départ selon l'une des revendications précédentes, **caractérisé en ce que** ledit matériau de départ comporte des additifs dans les proportions indiquées ci-après :
- moins de 10 %, préférentiellement 6,0 % d'agent d'écoulement comportant du polycarboxylate et/ou
- 1,0 à 5,0 %, préférentiellement 3,0 % d'organosilanol et/ou
- 60 à 90 %, préférentiellement 80,1 % d'eau, et/ou
- 0,5 à 1,5 %, préférentiellement 0,8 %, d'au moins un parmi l'hydroxyéthylcellulose et la carboxyméthylcellulose, et/ou
- 0,01 à 0,5 %, préférentiellement 0,1 %, de chaux hydratée ou de chaux éteinte, et/ou
- 2,5 à 6,5 %, préférentiellement 4,5 % d'accélérateur de prise et/ou
- 3,0 à 7,0 %, préférentiellement 5,0 de poudre de latex ou de dispersion de latex et/ou
- 0,1 à 0,5 %, préférentiellement 0,3 % d'agent conservateur.

7. Mélange de matières, susceptible d'être utilisé comme matériau de construction, préférentiellement comme béton, avec de l'eau pour effectuer la prise chimique, **caractérisé en ce que** ledit mélange de matières comporte un matériau de départ selon l'une des revendications précédentes et que l'au moins une charge représente le constituant principal dudit mélange de matières.

8. Mélange de matières selon la revendication 7, **caractérisé en ce que** ledit mélange de matières comporte l'au moins un additif dans une proportion pondérale comprise entre 1 % et 10 %, préférentiellement entre 2 % et 3 %, par rapport à la proportion pondérale dudit liant.

9. Mélange de matières selon les revendications 7 ou 8, **caractérisé en ce que** ledit mélange de matière durcie convient, après avoir subi un durcissement, aux constructions aériennes, et que le mélange de matières durci présente préférentiellement une résistance à la compression d'au moins 30 N/mm², encore plus préférentiellement d'au moins 35 N/mm².

10. Mélange de matières selon l'une des revendications 7 à 9, **caractérisé en ce qu'**en termes quantitatifs, la proportion desdites nanoparticules est comprise entre 0,005 % et 0,2 %, préférentiellement entre 0,01 % à 0,1 %, par rapport audit liant.

11. Béton fabriqué à partir d'un mélange de matières, **caractérisé en ce que** ledit mélange de matières correspond au mélange de matières selon l'une des revendications 7 à 10 et qu'il a subi un durcissement.

12. Procédé de préparation d'un mélange de matières selon la revendication 7, qui est susceptible d'être utilisé comme matériau de construction, consistant à mélanger mécaniquement un liant, de l'eau pour effectuer la prise chimique, au moins un additif destiné à influer sur les propriétés et au moins une charge servant de matériau de base, l'au moins une charge représentant le constituant principal dudit mélange de matières, **caractérise en ce que** l'au moins un additif comprend des nanoparticules sous forme de particules de dioxyde de silicium, lesdites nanoparticules ayant une taille de particules inférieure à 10 nm, et que ladite charge comprend du sable issu d'un désert.

13. Procédé selon la revendication 12, **caractérisé en ce que** lesdites nanoparticules, s'agissant plus particulièrement de particules de dioxyde de silicium, sont ajoutées audit mélange de matières sous forme d'une émulsion aqueuse.
